# EUROPEAN PATENT APPLICATION

(11) **EP 3 530 882 A1**
(43) Date of publication of application: **28.08.2019**
(21) Application number: 18158694.2
(22) Date of filing: 26.02.2018
(51) Int. Cl.: F01D 5/28, F01D 9/04, F01D 9/06, B23P 15/02, B23K 33/00

(54) **METHOD OF MANUFACTURING A GUIDE VANE SEGMENT FOR A GAS TURBINE AND VANE SEGMENT HAVING A GOATING**

(71) Applicant: MTU Aero Engines AG, 80995 München (DE)
(72) Inventor: Thiele, Oliver, 85221 Dachau (DE); Bialek, Grzegorz, 35-328 Rzeszow (PL); Schlemmer, Markus, 84048 Mainburg / Sandelzhausen (DE)

(57) **Abstract**

The present invention relates to a method of manufacturing a guide vane segment for a gas turbine and a vane segment (1). The method comprises the step of providing an uncoated guide vane segment comprising at least one hollow vane (2) defining a radial channel through the vane segment with an opening (3) directed radially outward and/or inward. The channel opening surface defines an annular area (4,5) and said annular area is raised up above the surrounding surface. The vane segment (1) has a coating and a hollow vane (2) defining a radial channel through the vane segment (1). The channel is closed at its radially outer and/or inner end with a cover joined with an annular area, defined by said channel opening (3) surface and raised up above the surrounding surface. The closure is gas-tight and the joint is substantially free of coating material.

## Description

### Field of the invention

The present invention relates to a method of manufacturing a guide vane segment for a turbomachine and a guide vain segment obtained by this method.

### Technical background

Guide vane segments are usually coated with an anti-corrosion and/or anti-oxidation coatings. The removal of the coating at some areas is necessary for the subsequent process namely, brazing, soldering or welding a cover plate for closing the core exit. However, the machining process may cause damage of transition radius between two components surfaces. This may lead to may lead to unwanted stress concentrations and/or damage of the components.

Therefore an object of the present invention is to provide a to an improved method of manufacturing a vane segment for a turbomachine.

### Summary of the invention

According to the present invention a method of manufacturing a guide vane segment for a gas turbine engine comprises the step of providing an uncoated guide vane segment comprising at least one hollow vane defining a radial channel through the vane segment with an opening directed radially outward and/or inward, wherein said channel opening surface defines an annular area and said annular area is raised up above the surrounding surface. This allows for an improved and safe removal of the coating from the raised or elevated core exit, since the coated periphery is not situated at the same level such that the risk of damages thereof during the coating removal can be reduced.

Preferably the annular area is raised up above the surrounding surface by 0.05 to 10 mm.

The method may further comprise the steps of coating of the vane segment including the annular area, and removing the coating on the annular area to provide a planar, uncoated annular sealing surface.

The method may further comprise the step of closing at least one channel opening with a cover by joining it with the sealing surface, preferably raised up above the surrounding surface.

The cover may be brazed or welded, in particular laser welded, and/or the cover may be a metal sheet.

Preferably the closure leads to a gas tightness.

The vane segment may comprise one, two, three or more vanes.

The coating may be an anti-corrosion and/or anti-oxidation coating.

The present invention relates also to a vane segment having a coating and a hollow vane defining a radial channel through the vane segment, characterized in that the channel is closed at its radially outer and / or inner end with a cover joined with an annular area, defined by said channel opening surface and raised up above the surrounding surface, wherein the closure is gas-tight and the joint is substantially free of coating material.

### Brief description of drawings

Exemplary embodiments of the invention are described with reference to the following figures, which are provided for the purpose of illustration only, the full scope of the invention being set forth in the claims that follow:
- **Fig. 1**: shows a guide vane segment according to the invention;
- **Fig. 2**: shows another perspective view of the guide vane segment according to the invention;
- **Fig. 3a, b**: is a comparison between the prior art annular surface (fig. 3a) and raised up annular surface (fig. 3b);

### Detailed description of preferred embodiment

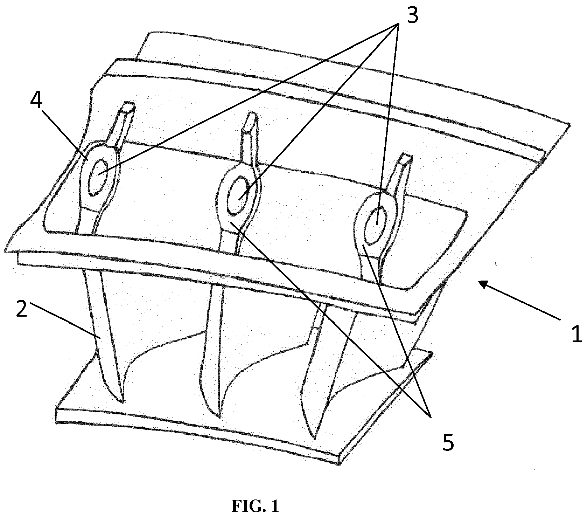

A guide vane segment (1) illustrated on fig. 1 comprises hollow vanes (2) defining the radial channels through the vane segment (1) with the openings (3) directed radially outward. The opening surfaces of the channels define the annular areas (4, 5).

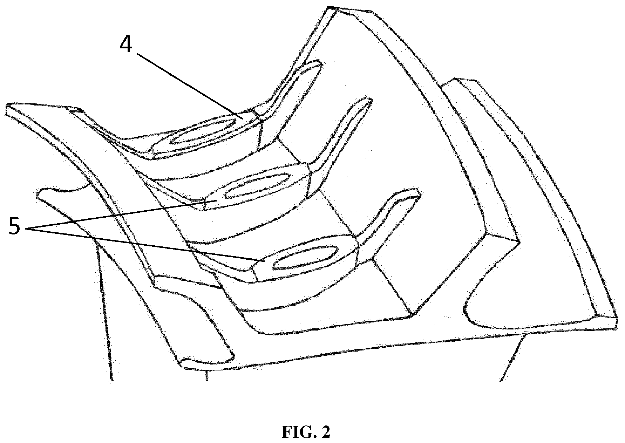

Fig. 2 shows another perspective view of the guide vane segment, showing that one of the annular areas (4) is raised up above the surrounding surface. Said annular area (4) is thickened compared to the other annular areas (5).

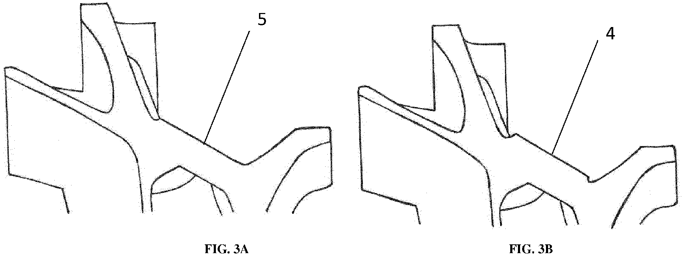

Fig. 3a, b is a comparison between the prior art annular surface (5) (left, i.e. fig. 3a) and raised up annular surface (4) (right, i.e. fig. 3b). The annular area (4) is raised up above the surrounding surface by 0.05 to 10 mm.

### List of reference numbers:

- 1: vane segment
- 2: hollow vane
- 3: opening
- 4,5: annular area

## Claims

1. A method of manufacturing a guide vane segment for a gas turbine engine, comprising a step of providing an uncoated guide vane segment comprising at least one hollow vane defining a radial channel through the vane segment with an opening directed radially outward and/or inward, **characterized in that** said channel opening surface defines an annular area and said annular area is raised up above the surrounding surface.

2. The method according to claim 1, wherein the annular area is raised up above the surrounding surface by 0.05 to 10 mm.

3. The method according to claim 1 or 2, further comprising the following steps:
- coating the vane segment including the annular area, and
- removing the coating on the annular area to provide a planar, uncoated annular sealing surface.

4. The method according to claim 3, further comprising a step of closing at least one channel opening with a cover by joining it with the sealing surface, preferably raised up above the surrounding surface.

5. The method according to claim 4, wherein the cover is brazed or welded, in particular laser welded, and/or the cover is a metal sheet.

6. The method according to claim 3 or 4, wherein the closure leads to a gas tightness.

7. The method according to any one of the preceding claims, wherein the vane segment comprises one, two, three or more vanes.

8. The method according to any one of the preceding claims, wherein the coating is an anti-corrosion and/or anti-oxidation coating.

9. A vane segment having a coating and a hollow vane defining a radial channel through the vane segment, **characterized in that** the channel is closed at its radially outer and/or inner end with a cover joined with an annular area, defined by said channel opening surface and raised up above the surrounding surface, wherein the closure is gas-tight and the joint is substantially free of coating material.
